# EUROPÄISCHE PATENTSCHRIFT

(11) **EP 2 870 765 B1**
(45) Veröffentlichungstag und Bekanntmachung des Hinweises auf die Patenterteilung: **20.11.2019**
(21) Anmeldenummer: 13731302.9
(22) Anmeldetag: 11.06.2013
(51) Int. Cl.: G01B 11/275, G06T 1/00, G06T 7/593, H04N 7/18

(54) **VERFAHREN UND ANORDNUNG ZUM PRÜFEN EINES FAHRZEUGUNTERBODENS EINES KRAFTFAHRZEUGES**
METHOD AND APPARATUS FOR INSPECTION OF AN UNDERCARRIAGE OF A VEHICLE
PROCÉDÉ ET APPAREIL POUR INSPECTION DE DESSOUS DE CAISSE DE VÉHICULES

(30) Priorität: 06.07.2012 DE 102012211791
(43) Veröffentlichungstag der Anmeldung: 13.05.2015
(73) Patentinhaber: Beissbarth GmbH, 80993 München (DE)
(72) Erfinder: NOBIS, Guenter, 72622 Nuertingen (DE); TAKAMI, Masato, 69115 Heidelberg (DE); UFFENKAMP, Volker, 71642 Ludwigsburg (DE)
(74) Vertreter: Schmitt-Nilson Schraud Waibel Wohlfrom Patentanwälte Partnerschaft mbB
(86) Internationale Anmeldenummer: PCT/EP2013/062021
(87) Internationale Veröffentlichungsnummer: WO 2014/005804

(56) Entgegenhaltungen:
- WO-A1-2010/028965
- DE-A1-102006 035 232
- US-A1- 2007 040 911
- US-A1- 2009 290 757

## Beschreibung

Die Erfindung betrifft ein Verfahren und eine Anordnung zum Prüfen eines Fahrzeugunterbodens eines Kraftfahrzeuges.

### Stand der Technik

Zur Aufnahme eines Fahrzeugunterbodens sind eine Reihe von Verfahren und Vorrichtungen bekannt. Dabei wird ein zweidimensionales Bild als Ausgabe erzeugt. Es existieren jedoch auch Systeme, die dreidimensionale Informationen liefern. Bei einigen Verfahren werden die dreidimensionalen Informationen durch Aufnahmen aus unterschiedlichen Blickwinkeln gewonnen. Andere Verfahren erzeugen dreidimensionale Informationen aus einer Projektion von Laserlinien auf den Fahrzeugunterboden.

Vielfach wird dazu eine mobile Vorrichtung mit Rädern und einem Stab verwendet, an dem sich ein Spiegel befindet. Diese Form der manuell-optischen Inspektion hat den Vorteil, dass sie mobil einsetzbar ist. Jedoch wird der mittlere Teil des Fahrzeugunterbodens meist damit nicht erreicht.

Die US 2002 009 732 1 A1 beschreibt eine Stab-Vorrichtung mit einer digitalen Kamera.

Die WO 2004 11 00 54 A1 beschreibt eine ferngesteuerte Plattform, welche mit einer oder mehreren Kameras bestückt ist.

Die US 2008 211 914 A1 beschreibt ein Verfahren zur automatischen Erzeugung eines Unterbodenbildes mittels einer Zeilenkamera. Bei dem dort beschrieben Verfahren wird die Fahrtrichtung und die Geschwindigkeit des Fahrzeugs durch zusätzliche Sensoren mit erfasst, um ein Gesamtbild mit ausreichender Qualität zu erzeugen.

Die US 2007 027 376 0 A1 beschreibt, wie aus den Bildern mehrerer Flächenkameras ein Gesamtbild erzeugt wird. Die Position und Blickrichtung der Kameras relativ zueinander müssen dazu vorab bekannt sein. Diese relative Orientierung wird rechnerisch durch Verwendung der Öffnungswinkel der Kameras, die Blickrichtung der Kameras gegenüber der Vertikalen und den erwarteten Abstand zwischen Kameras und Unterboden ermittelt. Die Einzelbilder werden rektifiziert und zu einem einzigen Unterbodenbild zusammengesetzt.

In der EP 1 619 625 A2 wird beschrieben, dass eine Mehrzahl von Kameras in einer vordefinierten, linearen oder zweidimensionalen oder dreidimensionalen Anordnung verwendet wird, so dass sich das Blickfeld jeder Kamera zumindest teilweise mit dem Blickfeld mindestens einer anderen Kamera überdeckt. Die generierten Bilddaten aus dieser Anordnung können auch zur Generierung eines dreidimensionalen Bildes weiterverarbeitet werden.

Ein weiteres Verfahren zur Bestimmung von Fahrzeugansichten einschließlich der Generierung von dreidimensionalen Profildaten wird in der US 2009 290 757 A1 beschrieben. Bei dem dort beschrieben Verfahren erfolgt die Messung nach dem Prinzip der Laser-Triangulation. Dazu werden eine oder mehrere Kameras mit einer oder mehreren Laserlinien so konfiguriert, dass die Laserlinien einen definierten Winkel zu den Kameras aufweisen und die auf dem Objekt abgebildeten Laserlinien im Blickfeld der Kameras liegen. Weiterhin wird auch die Stereo-Triangulation unter Verwendung von zwei oder mehr Kameras als alternative Konfiguration zur Generierung von dreidimensionalen Profildaten genannt.

Die US 2009 290 757 A1 beschreibt einen Prüfstand, bei dem aus unterschiedlichen Perspektiven Fahrzeuge aufgenommen werden. Dabei werden Laserlinien auf die Oberfläche projiziert, um eine dreidimensionale Rekonstruktion zu ermöglichen. Es wird wahlweise das gesamte Fahrzeug oder auch nur ein Teil des Fahrzeugs rekonstruiert, um es mit einem Modell oder einem Datensatz an Aufnahmen zu vergleichen und so Unregelmäßigkeiten auf dem Fahrzeug zu detektieren.

Die DE 197 05 047 A1 betrifft ein Verfahren und eine Vorrichtung zur Messung der Profiltiefe eines Kraftfahrzeugreifens. Dabei wird das Reifenprofil des Kraftfahrzeugreifens von Laserlicht eines Lasers beaufschlagt. Das Laserlicht erzeugt einen Lichtfleck auf die Profiloberfläche des Kraftfahrzeugreifens. Das von dem Reifenprofil reflektierte Licht wird durch einen bildauflösenden Sensor erfasst. Dabei beobachtet der bildauflösende Sensor die Position und/oder die Form des Lichtflecks. Die Signale des bildauflösenden Sensors werden zur Erzeugung von Ausgangsdaten nach Maßgabe der Profiltiefe verarbeitet. Während der Messung wird der Kraftfahrzeugreifen rotiert, so dass die Messung an mehreren Stellen des Reifenprofils durchführbar ist.

Zur videobasierten Aufnahme des Fahrzeugunterbodens sind Vorrichtungen und Verfahren für gesonderte Anwendungen, wie etwa an Kontrollstationen an Grenzübergängen, Einfahrten oder Straßen bereits am Markt verfügbar. Es existieren sowohl Systeme, die mit einer einzigen Aufnahme den gesamten Unterboden aufnehmen, als auch Systeme, die aus mehreren zeitlich und/oder räumlich versetzten Aufnahmen ein Unterbodenbild des Fahrzeugs erzeugen.

### Offenbarung der Erfindung

Die Erfindung schafft ein Verfahren zum Prüfen eines Fahrzeugunterbodens eines Kraftfahrzeuges mit den Merkmalen des Patentanspruchs 1 sowie eine Anordnung zum Prüfen eines Fahrzeugunterbodens eines Kraftfahrzeuges mit den Merkmalen des Patentanspruchs 8.

In Patentanspruch 1 ist ein Verfahren zum Prüfen eines Fahrzeugunterbodens eines Kraftfahrzeuges mit folgenden Verfahrensschritten definiert: Erfassen mindestens eines Abbildes zumindest eines Bereiches des Fahrzeugunterbodens des Kraftfahrzeuges mittels einer Kameraeinrichtung; Erzeugen eines dreidimensionalen Tiefenbildes anhand des mindestens einen erfassten Abbildes des zumindest einen Bereiches des Fahrzeugunterbodens des Kraftfahrzeuges; und Prüfen des zumindest einen Bereiches des Fahrzeugunterbodens des Kraftfahrzeuges anhand des erzeugten dreidimensionalen Tiefenbildes des Fahrzeugunterbodens mittels optischer Bilderkennung.

In Patentanspruch 8 ist eine Anordnung zum Prüfen eines Fahrzeugunterbodens eines Kraftfahrzeuges definiert, wobei die Anordnung eine Kameraeinrichtung, welche dazu ausgelegt ist, mindestens ein Abbild zumindest eines Bereiches des Fahrzeugunterbodens des Kraftfahrzeuges zu erfassen, und eine Auswerteeinrichtung aufweist, welche dazu ausgelegt ist, ein dreidimensionalen Tiefenbild anhand des mindestens einen erfassten Abbildes des zumindest einen Bereiches des Fahrzeugunterbodens des Kraftfahrzeuges zu erzeugen und den zumindest einen Bereich des Fahrzeugunterbodens des Kraftfahrzeuges anhand des erzeugten dreidimensionalen Tiefenbildes des Fahrzeugunterbodens mittels optischer Bilderkennung zu prüfen.

### Vorteile der Erfindung

Die vorliegende Erfindung gewährleistet eine kostengünstige und robuste Lösung durch die Verwendung von einer Kameraeinrichtung. Ferner benötigt die vorliegende Erfindung keine langzeitstabile Kalibrierung mit anderen Sensoren oder die Verwendung von Laserliniensendern. Bei der vorliegenden Erfindung kann ein einfacher Einbau der Anordnung in die Fahrbahn oder in eine flache Überfahrschwelle erfolgen.

Ferner erlaubt die vorliegende Erfindung ein Erkennen ungültiger Messungen bei einem Überschreiten einer vorgegebenen Überfahrgeschwindigkeit und eine näherungsweise Ermittlung der Fahrgeschwindigkeit.

Es ist noch ein weiterer Vorteil der vorliegenden Erfindung, dass durch die hohe Auflösung des zweidimensionalen Abbildes eine hohe Auflösung des dreidimensionalen Modells mit der Tiefeninformation des Unterbodens zur Prüfung des Unterbodens erreicht wird.

Der Erfindungsgedanke sieht vor, eine Prüfung eines Fahrzeugunterbodens und eine zweidimensionale Darstellung des Fahrzeugunterbodens mit simultaner Erzeugung eines dreidimensionalen Tiefenbildes mittels nur einer Kameraeinrichtung vorzunehmen.

Gemäß einer vorteilhaften Weiterbildung der Erfindung ist vorgesehen, dass das Verfahren bei einem über die Kameraeinrichtung hinweg rollenden Kraftfahrzeug durchgeführt wird. Dadurch ergibt sich vorteilhaft die Möglichkeit zur Aufzeichnung und Speicherung von Bilddaten für eine verbesserte Prüfung, sowie die Möglichkeit zum Vergleich des aktuellen Zustandes des Fahrzeugunterbodens mit gespeicherten Referenzdaten in einer Datenbank. Durch die Beschränkung des Systems auf die Untersuchung des Fahrzeugunterbodens, können die Kosten im Vergleich zu einem System, welches das gesamte Fahrzeug untersucht, niedrig gehalten werden.

Gemäß einer weiteren vorteilhaften Weiterbildung der Erfindung ist vorgesehen, dass das Verfahren in Bereichen durchgeführt wird, in welchen das Kraftfahrzeug nur mit Schrittgeschwindigkeit fährt. Dies erlaubt vorteilhaft auf eine einfache Weise, eine automatisierte Inspektion des Fahrzeugunterbodens bei rollendem Kraftfahrzeug ohne Zwischenstopp des Kraftfahrzeuges durchzuführen.

Gemäß einer weiteren vorteilhaften Weiterbildung der Erfindung ist vorgesehen, dass als die Kameraeinrichtung eine Kamera verwendet wird.

Gemäß einer weiteren vorteilhaften Weiterbildung der Erfindung ist vorgesehen, dass als die Kameraeinrichtung eine Mehrzahl von Kameras verwendet wird.

Gemäß einer weiteren vorteilhaften Weiterbildung der Erfindung ist vorgesehen, dass als die Kameraeinrichtung eine Mehrzahl von in entgegengesetzter Richtung ausgerichteten Kameras verwendet wird. Dadurch kann eine ausreichend hohe Auflösung des zweidimensionalen Gesamtbildes und der dreidimensionalen Tiefeninformation zur Prüfung des Fahrzeugunterbodens erreicht werden.

Gemäß einer weiteren vorteilhaften Weiterbildung der Erfindung ist vorgesehen, dass das Verfahren an einer Einfahrt zu einer Tankstelle und/oder zu einer Kraftfahrzeugwerkstatt und/oder zu einem Parkplatz und/oder bei einem Kraftfahrzeughändler durchgeführt wird.

Gemäß einer weiteren vorteilhaften Weiterbildung der Erfindung ist vorgesehen, dass die Anordnung ferner eine Anzeigeeinrichtung aufweist, welche dazu ausgelegt ist, ein Prüfergebnis des Prüfens des Fahrzeugunterbodens des Kraftfahrzeuges anzuzeigen. Dies erlaubt eine einfache Prüfung des Fahrzeugunterbodens an einem Monitor.

Gemäß einer weiteren vorteilhaften Weiterbildung der Erfindung ist vorgesehen, dass die Anordnung ferner eine Beleuchtungseinrichtung aufweist, welche dazu ausgelegt ist, den Fahrzeugunterboden des Kraftfahrzeuges zu beleuchten.

Die obigen Ausgestaltungen und Weiterbildungen lassen sich, sofern sinnvoll, beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen. Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer Anordnung zum Prüfen eines Fahrzeugunterbodens eines Kraftfahrzeuges gemäß einer Ausführungsform der vorliegenden Erfindung;
- Fig. 2-9: eine schematische Darstellung einer Draufsicht auf ein Kamerasichtfeld auf einen Fahrzeugunterboden mit einer Anordnung zum Prüfen eines Fahrzeugunterbodens eines Kraftfahrzeuges gemäß einer Ausführungsform der vorliegenden Erfindung;
- Fig. 10: eine schematische Darstellung einer Anordnung zum Prüfen eines Fahrzeugunterbodens eines Kraftfahrzeuges gemäß einer Ausführungsform der vorliegenden Erfindung;
- Fig. 11: eine schematische Darstellung einer Anordnung zum Prüfen eines Fahrzeugunterbodens eines Kraftfahrzeuges gemäß einer Ausführungsform der vorliegenden Erfindung;
- Fig. 12: eine schematische Darstellung einer Überfahrrinne gemäß einer Ausführungsform der vorliegenden Erfindung;
- Fig. 13: eine schematische Darstellung einer Anordnung zum Prüfen eines Fahrzeugunterbodens eines Kraftfahrzeuges gemäß einer Ausführungsform der vorliegenden Erfindung; und
- Fig. 14: eine grafische Darstellung eines Verfahrens gemäß einer weiteren Ausführungsform der vorliegenden Erfindung;

In den Figuren der Zeichnung sind gleiche und funktionsgleiche Elemente, Merkmale und Komponenten - sofern nichts Gegenteiliges ausgeführt ist - jeweils mit denselben Bezugszeichen versehen. Es versteht sich ferner, dass Komponenten und Elemente in den Zeichnungen aus Gründen der Übersichtlichkeit und Verständlichkeit nicht notwendigerweise maßstabsgetreu zueinander wiedergegeben sind.

### Ausführungsformen der Erfindung

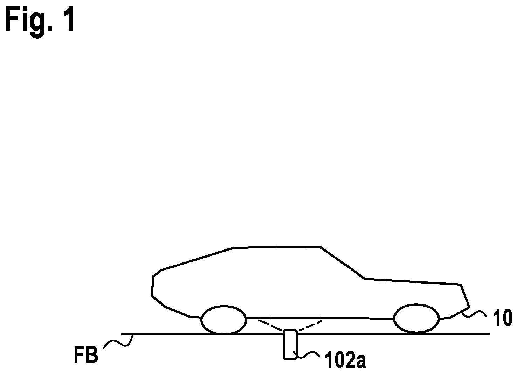

Die Figur 1 zeigt eine schematische Darstellung einer Anordnung zum Prüfen eines Fahrzeugunterbodens eines Kraftfahrzeuges gemäß einer Ausführungsform der vorliegenden Erfindung.

Das Verfahren zur Prüfung eines Fahrzeugunterbodens U eines Kraftfahrzeuges 10 verwendet eine Kameraeinrichtung 102a. Die Kameraeinrichtung 102a umfasst beispielsweise einen Flächensensor in Form eines CCD-Sensors oder eines sonstigen lichtempfindlichen elektronischen Bauelementes. CCD ist hierbei die Abkürzung von Charge-coupled Device.

Die Kameraeinrichtung 102a kann mit einem Objektiv ausgestattet sein und bildet eine Einheit zur Bildmessung. Die Bildmesseinheit befindet sich in einer Vertiefung innerhalb der Fahrbahn FB oder innerhalb einer überfahrbaren Schwelle auf der Fahrbahn FB. Überquert das Kraftfahrzeug 10 die Bildmesseinheit, werden Bilder des Fahrzeugunterbodens U des Kraftfahrzeuges 10 aufgezeichnet.

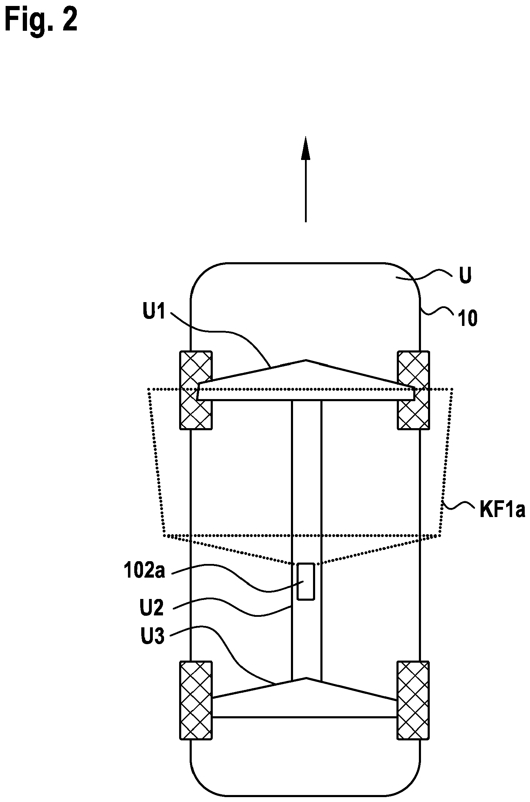

Die Figur 2 zeigt eine schematische Darstellung einer Draufsicht auf einen Fahrzeugunterboden gemäß einer Ausführungsform der vorliegenden Erfindung.

Ein Abbild KF1a wird von einer Kameraeinrichtung 102a aufgenommen. Die Auflösung des Abbildes KF1a ist abhängig davon, unter welchem Abbildungsmaßstab ein Objektdetail auf dem Flächensensor der Bildmesseinheit abgebildet wird. Der Abbildungsmaßstab ist eine Funktion der Brennweite und des Aufnahmeabstandes zwischen Bildmesseinheit und Unterboden. Die Brennweite und die Abbildungseigenschaften des Objektivs, wie etwa die Tiefenschärfe, werden so gewählt, dass der Fahrzeugunterboden U des Kraftfahrzeuges 10 einer Kategorie, wie etwa Personenkraftwagen, mit hinreichender Qualität abgebildet wird, sodass Untereinheiten U1, U2 U3 des Fahrzeugunterbodens U überprüft werden können.

Dazu reicht eine Abschätzung, dass der Unterboden aller Personenkraftwagen sich in etwa in einem Abstand von 100 mm bis 500 mm über der Fahrbahn befindet. Die Auslegung der Bildmesseinheit auf den ungünstigsten Fall, d.h. auf die Fahrzeuge mit der größten Bodenfreiheit, gewährleistet eine hinreichende Auflösung der Bilder zur Prüfung des Unterbodens auf mögliche Schadstellen.

Für andere Fahrzeugkategorien, wie etwa Nutzfahrzeug, LKW, Busse, können gegebenenfalls Bildmesseinheiten mit entsprechenden optischen Eigenschaften verwendet werden.

Die Qualität der Bilder ist abhängig von der Fahrgeschwindigkeit des Fahrzeugs und der Belichtungszeit der Bilder. Unter der beispielsweise ausgewählten Prämisse, dass sich das Fahrzeug mit einer Schrittgeschwindigkeit von weniger als 15 km/h über die Kamera bewegen soll, kann die Belichtungszeit so gewählt, dass die Bewegungsunschärfe in den Bildern durch das sich bewegende Fahrzeug vernachlässigbar klein ist. Ist die Fahrgeschwindigkeit zu hoch, führt eine daraus resultierende Bewegungsunschärfe im Bild zu einer Verschlechterung des Kontrastes und kann somit zum Erkennen ungültiger Messungen bei Überschreiten der vorgegebenen Geschwindigkeit herangezogen werden.

Die Belichtungszeit ist entscheidend abhängig vom verfügbaren Licht. Eine Beleuchtungseinheit, abgestimmt auf die Eigenschaften des Bildmesssensors, eine optimale Auslegung im sichtbaren und/oder nicht sichtbaren Spektralbereich, kann zur Ergänzung des natürlich vorhandenen Umgebungslichtes eingesetzt werden. Das ist vor allem bei einem System mit 24-Stunden Einsatz erforderlich.

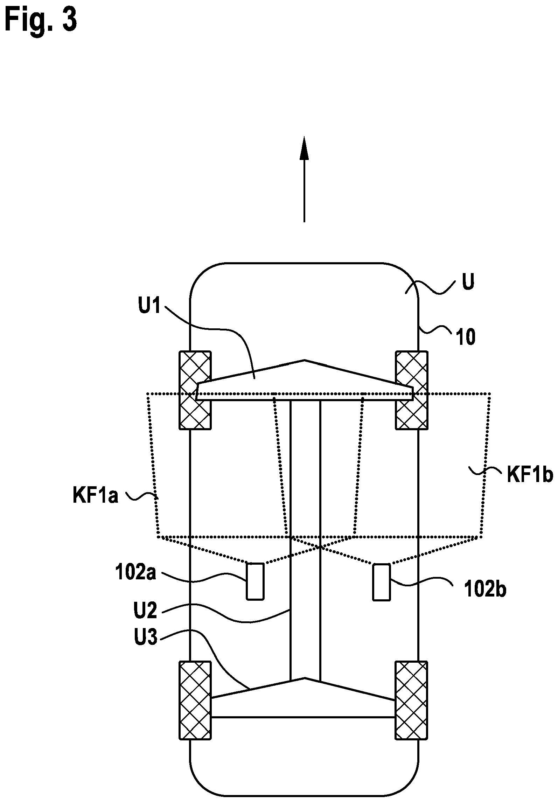

Die Figur 3 zeigt eine schematische Darstellung einer Draufsicht auf einen Fahrzeugunterboden gemäß einer Ausführungsform der vorliegenden Erfindung.

Bei der in der Figur 3 gezeigten Anordnung kommen zwei in die gleiche Richtung ausgerichtete Kameraeinrichtungen 102a, 102b zum Einsatz. Die beiden Kameraeinrichtungen 102a, 102b erfassen zwei Abbilder KF1a, KF1b zumindest eines Bereiches des Fahrzeugunterbodens U des Kraftfahrzeuges 10.

Die Figur 3 zeigt beispielhaft eine Anordnung von zwei Kameraeinrichtungen 102a, 102b, die nebeneinander angeordnet sind. Eine Erhöhung der Anzahl der Kameraeinrichtungen quer zur Fahrtrichtung vermindert die Verdeckungen quer zur Fahrtrichtung und erlaubt zum Beispiel den Blick in die Radkästen des Fahrzeugs. Die Querüberdeckung beträgt beispielhaft etwa 5% bis 10% und ermöglicht damit eine lückenlose Abbildung des Fahrzeugunterbodens U, indem aus den Teilbildern ein Gesamtbild gefügt wird.

Die weiteren in der Figur 3 verwendeten Bezugszeichen sind bereits in der zu der Figur 2 zugehörigen Figurenbeschreibung beschrieben und werden daher nicht weiter erläutert.

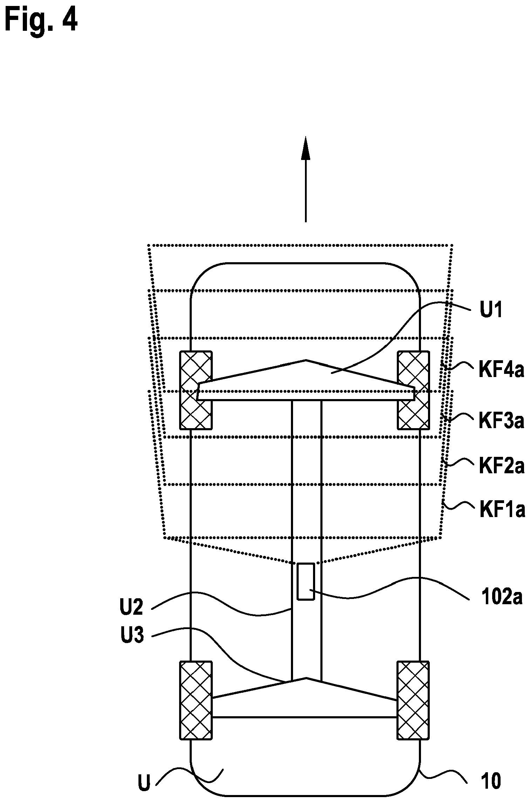

Die Figur 4 zeigt eine schematische Darstellung einer Draufsicht auf einen Fahrzeugunterboden gemäß einer Ausführungsform der vorliegenden Erfindung.

Bei der in der Figur 4 gezeigten Anordnung kommt eine Kameraeinrichtung 102a zum Einsatz. Die Kameraeinrichtungen 102a erfasst eine Sequenz von Abbildern KF1a... KF5a des Fahrzeugunterbodens U des Kraftfahrzeuges 10.

Dabei wird die Kameraeinrichtungen 102a von dem Kraftfahrzeug 10 in die durch den Pfeil dargestellte Richtung überfahren.

Weiterhin kann die Fahrgeschwindigkeit des Kraftfahrzeuges 10 auch genähert durch die bekannte Aufnahmefrequenz und den als genähert definierten Abstand der Kameraeinrichtung 102a zum Unterboden ermittelt werden. Dazu wird ein Objektmerkmal in mindestens zwei Bildern gesucht und der im Bild zurückgelegt Weg mit der Bildaufnahmefrequenz und dem Abstand zwischen der Kameraeinrichtung 102a und dem Fahrzeugunterboden U in Bezug gesetzt. Vorteilhaft ist die Verwendung mehrerer Objektmerkmale und eine Mittelbildung der ermittelten Einzelgeschwindigkeiten. Die aus Objektmerkmalen ermittelte Fahrgeschwindigkeit kann ebenfalls zum Erkennen ungültiger Messungen bei Überschreiten der vorgegebenen Geschwindigkeit herangezogen werden.

Die Bildaufnahmefrequenz wird so gewählt, dass der Unterboden lückenlos erfasst wird und die Bilder der einen Kameraeinrichtung 102a sich um mindestens 50% überdecken. In Figur 4 erfasst die Kameraeinrichtungen 102a sequentiell den Fahrzeugunterbodens U des Kraftfahrzeuges in den aufeinanderfolgenden Abbildern KF1a... KF5a während sich das Fahrzeug über die Kameraeinrichtung 102a hinwegbewegt. Dadurch wird die Bereitstellung einer dreidimensionalen Tiefeninformation mit nur einer Kameraeinrichtung 102a ermöglicht.

Dabei werden Übereinstimmungen in den Abbildern KF1a... KF5a ermittelt und von Abbild zu Abbild verfolgt. Die Bewegungsvektoren der Übereinstimmungen als Funktion der Zeit erlauben die Rekonstruktion des dreidimensionalen Objektes mit gleichzeitiger Bestimmung der räumlichen relativen Orientierungen zwischen den Aufnahmepositionen einer sich quasi bezüglich eines statischen Objekts bewegten Kameraeinrichtung 102a. Der Maßstab der dreidimensionalen Tiefeninformation ist jedoch unbestimmt.

Die weiteren in der Figur 4 verwendeten Bezugszeichen sind bereits in der zu den Figuren 2 und 3 zugehörigen Figurenbeschreibung beschrieben und werden daher nicht weiter erläutert.

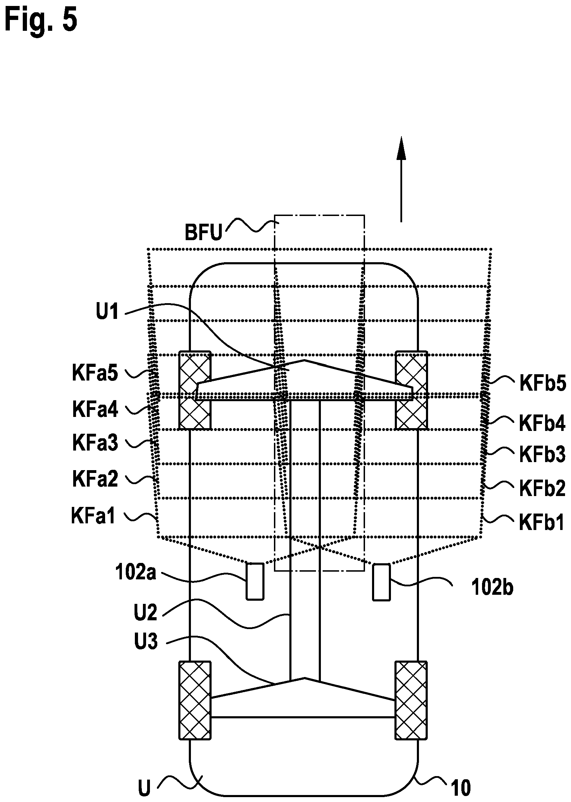

Die Figur 5 zeigt eine schematische Darstellung einer Draufsicht auf einen Fahrzeugunterboden gemäß einer Ausführungsform der vorliegenden Erfindung.

Bei der in der Figur 5 gezeigten Anordnung kommen zwei in die gleiche Richtung ausgerichtete Kameraeinrichtungen 102a, 102b zum Einsatz. Die beiden Kameraeinrichtungen 102a, 102b erfassen zwei Sequenzen von Abbildern KF1a... KF5a, KF1b... KF5b des Fahrzeugunterbodens U des Kraftfahrzeuges 10.

Dabei werden die beiden Kameraeinrichtungen 102a, 102b von dem Kraftfahrzeug 10 in die durch den Pfeil dargestellte Richtung überfahren.

Die Figur 5 zeigt, wie die dreidimensionale Information des gesamten Fahrzeugunterbodens U auch bei dieser Anordnung durch das Verfahren "Structure from motion", auf Deutsch "Struktur durch Bewegung", für die Kameraeinrichtungen 102a, 102b generiert werden kann, indem eine Bildüberdeckung BFU in Form eines Überlappens der beiden Sequenzen von Abbildern KF1a... KF5a, KF1b... KF5b in Fahrrichtung des Kraftfahrzeuges 10 erfolgt. Die Bildaufnahme der beiden Kameraeinrichtungen 102a, 102b muss nicht synchron erfolgen.

Die weiteren in der Figur 5 verwendeten Bezugszeichen sind bereits in der zu den Figuren 2, 3 und 4 zugehörigen Figurenbeschreibung beschrieben und werden daher nicht weiter erläutert.

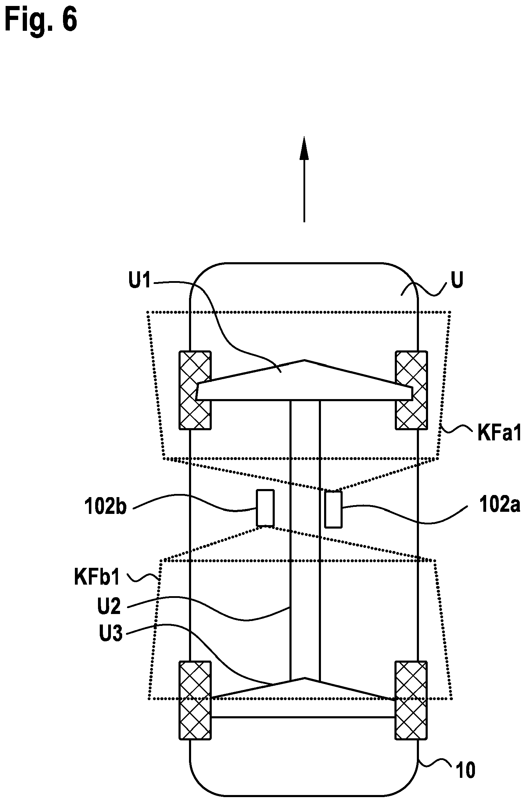

Die Figur 6 zeigt eine schematische Darstellung einer Draufsicht auf einen Fahrzeugunterboden gemäß einer Ausführungsform der vorliegenden Erfindung.

Bei der in der Figur 6 gezeigten Anordnung kommen zwei in die entgegengesetzte Richtung ausgerichtete Kameraeinrichtungen 102a, 102b zum Einsatz. Die beiden Kameraeinrichtungen 102a, 102b erfassen zwei Abbilder KF1a, KF1b zumindest eines Bereiches des Fahrzeugunterbodens U des Kraftfahrzeuges 10.

Die weiteren in der Figur 6 verwendeten Bezugszeichen sind bereits in der zu der Figur 2 zugehörigen Figurenbeschreibung beschrieben und werden daher nicht weiter erläutert.

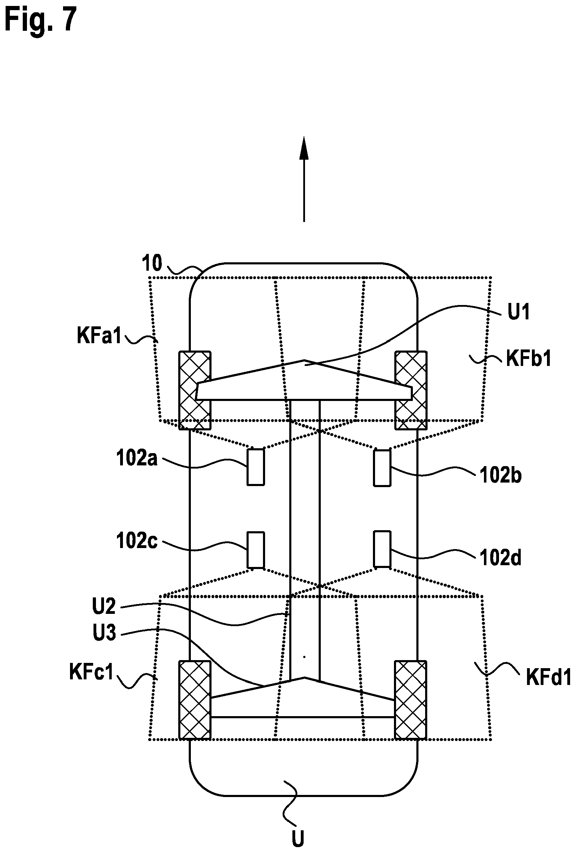

Die Figur 7 zeigt eine schematische Darstellung einer Draufsicht auf einen Fahrzeugunterboden gemäß einer Ausführungsform der vorliegenden Erfindung.

Bei der in der Figur 7 gezeigten Anordnung kommen vier Kameraeinrichtungen 102a, 102b, 102c, 102d zum Einsatz, wobei jeweils zwei Kameraeinrichtungen in die gleiche Richtung ausgerichtet sind. Die vier Kameraeinrichtungen 102a, 102b erfassen vier Abbilder KF1a, KF1b, KF1c, KF1d des Fahrzeugunterbodens U des Kraftfahrzeuges 10.

Die weiteren in der Figur 7 verwendeten Bezugszeichen sind bereits in der zu der Figur 2 zugehörigen Figurenbeschreibung beschrieben und werden daher nicht weiter erläutert.

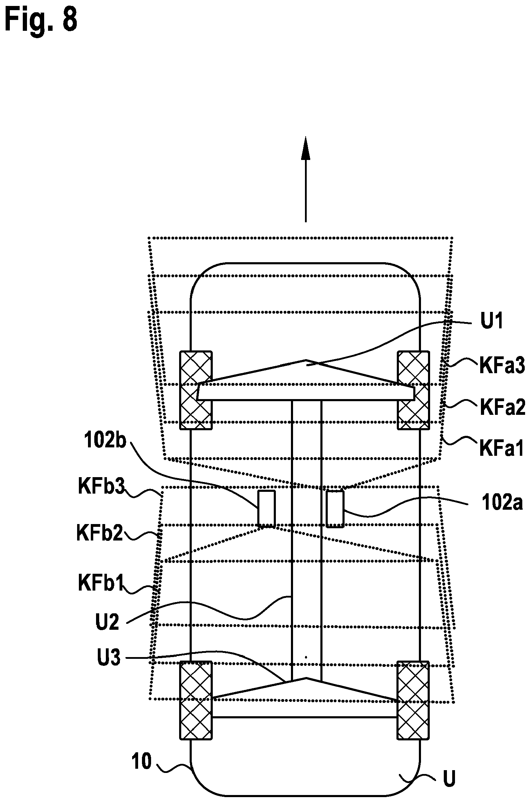

Die Figur 8 zeigt eine schematische Darstellung einer Draufsicht auf einen Fahrzeugunterboden gemäß einer Ausführungsform der vorliegenden Erfindung.

Bei der in der Figur 8 gezeigten Anordnung kommen zwei in die entgegengesetzte Richtung ausgerichtete Kameraeinrichtungen 102a, 102b zum Einsatz. Die beiden Kameraeinrichtungen 102a, 102b erfassen zwei Sequenzen von Abbildern KF1a... KF5a, KF1b... KF5b des Fahrzeugunterbodens U des Kraftfahrzeuges 10.

Dabei werden die beiden Kameraeinrichtungen 102a, 102b von dem Kraftfahrzeug 10 in die durch den Pfeil dargestellte Richtung überfahren.

Die zwei Kameraeinrichtungen 102a, 102b weise keine gegenseitige Überdeckung auf, wobei die Kameraeinrichtungen 102a in Fahrtrichtung schaut, die zweite Kameraeinrichtungen 102b entgegen der Fahrtrichtung. Eine Rekonstruktion nach dem Prinzip "Structure from motion", auf Deutsch "Struktur durch Bewegung", kann wiederum getrennt für jede Kameraeinrichtung erfolgen. Die Aufnahmekonfiguration bietet jedoch die Möglichkeit, Verdeckungen in Fahrtrichtung zu vermindern

Die weiteren in der Figur 8 verwendeten Bezugszeichen sind bereits in der zu den Figuren 2, 3 und 4 zugehörigen Figurenbeschreibung beschrieben und werden daher nicht weiter erläutert.

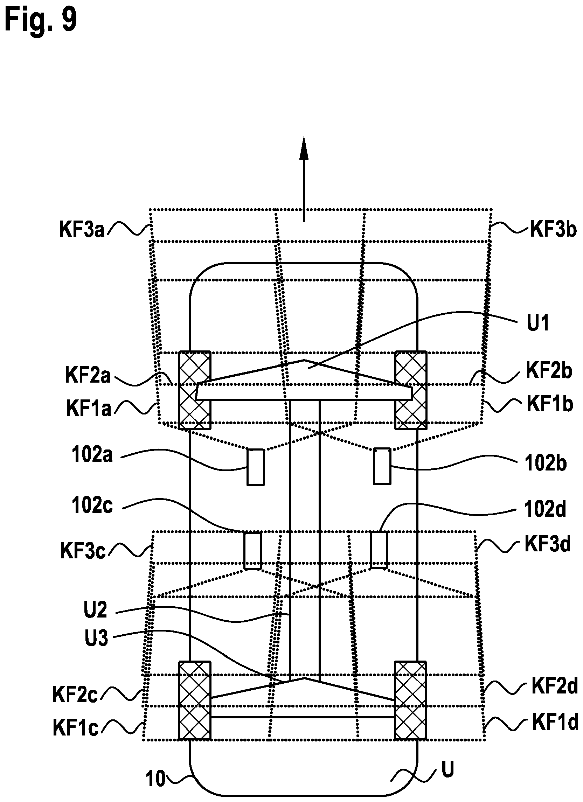

Die Figur 9 zeigt eine schematische Darstellung einer Draufsicht auf einen Fahrzeugunterboden gemäß einer Ausführungsform der vorliegenden Erfindung.

Die Figur 9 zeigt eine weitere Ausführung in Form einer Kombination aus nebeneinander angeordneten und entgegen gesetzt ausgerichteten Kameraeinrichtungen zur Verdeutlichung der Minimierung sichttoter Räume gleichzeitig quer zur Fahrtrichtung und in Fahrtrichtung.

Bei der in der Figur 9 gezeigten Anordnung kommen vier Kameraeinrichtungen 102a, 102b, 102c, 102d zum Einsatz, wobei jeweils zwei Kameraeinrichtungen in die gleiche Richtung ausgerichtet sind. Die vier Kameraeinrichtungen 102a, 102b, 102c, 102d erfassen vier Sequenzen von Abbildern KF1a, KF1b, KF1c, KF1d des Fahrzeugunterbodens U des Kraftfahrzeuges 10.

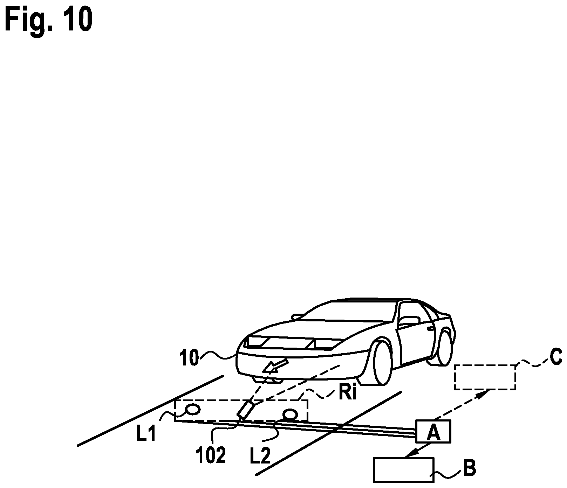

Die Figur 10 zeigt eine Ausführungsform der Anordnung zur Prüfung des Fahrzeugunterbodens mit einer Kameraeinrichtung 102a und zwei Beleuchtungseinrichtungen L1 und L2 in oder auf einer Fahrbahn FB quer zur Fahrtrichtung des Kraftfahrzeuges 10.

Die Kameraeinrichtung 102a und die Beleuchtungseinrichtungen L1 und L2 sind mit einer Auswerteinrichtung A verbunden. Die Auswerteinrichtung A ist mit einer Anzeigeeinrichtung B verbunden. Ferner kann die Auswerteeinrichtung A noch mit einer Servereinrichtung C verbunden sein.

Die Auswerteeinheit A ist zur Steuerung der Bildmesseinheit, der Beleuchtungseinheit und Speicherung der Bilder während jeder Überfahrt ausgeführt.

Das Prüfsystem kann zweckmäßigerweise in eine Überfahrrinne Ri integriert werden, wie sie aus dem Straßenbau bekannt und bewährt sind.

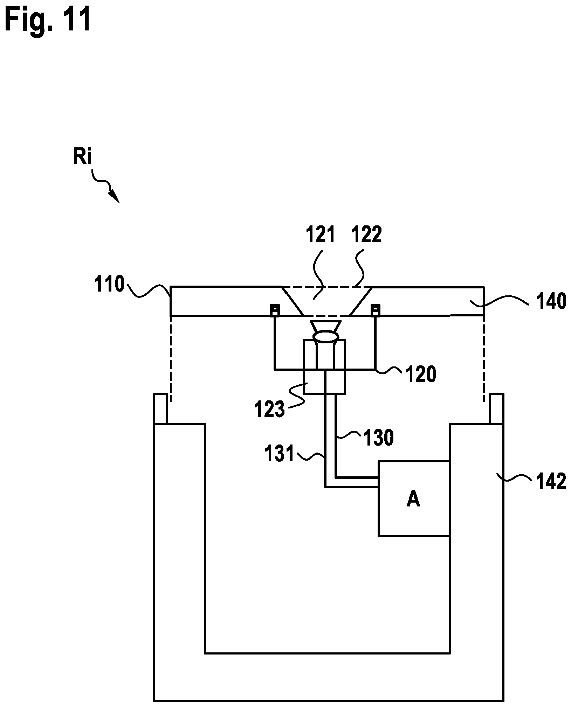

Die Figur 11 zeigt eine schematische Darstellung einer Anordnung zum Prüfen eines Fahrzeugunterbodens eines Kraftfahrzeuges im Querschnitt gemäß einer Ausführungsform der vorliegenden Erfindung.

Ein Deckel 122 der Überfahrrinne Ri weist eine Ausnehmung 121 auf, durch den die Kameraeinrichtung 102 den Fahrzeugunterboden U erfasst und die Beleuchtungseinheit L den Unterboden beleuchtet. Die Kameraeinrichtung 102 und die Beleuchtung sind an der Unterseite des Deckels 122 beispielsweise mit einem Montagebügel 120 befestigt.

Die Kameraeinrichtung 102 und die Beleuchtung sind über zwei Kabelverbindungen 130, 131 mit der Auswerteeinrichtung A gekoppelt. Die Auswerteeinrichtung A ist an einer Fundamentbefestigung 142 angeordnet. Die Überfahrrinne Ri weist ferner zwei Endbereiche 110 und 140 auf.

Die Auswerteeinrichtung A kann ferner in die Überfahrrinne Ri integriert werden. Eine Montage an die Seitenwand der Überfahrrinne Ri schützt die die Auswerteeinheit A. vor Stauwasser.

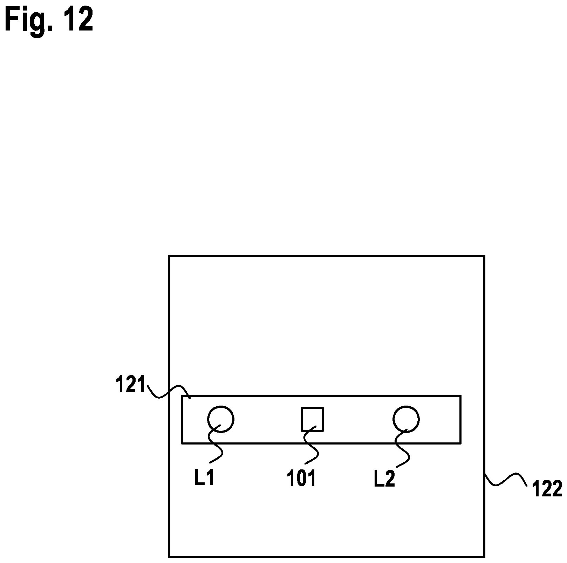

Die Figur 12 zeigt eine schematische Darstellung einer Überfahrrinne gemäß einer Ausführungsform der vorliegenden Erfindung.

Eine Überfahrrinne Ri umfasst einen Deckel 122 und eine Ausnehmung 121. In der Ausnehmung 121 sind eine Kameraeinrichtung 102 und zwei Beleuchtungseinrichtungen L1 und L2 ausgebildet.

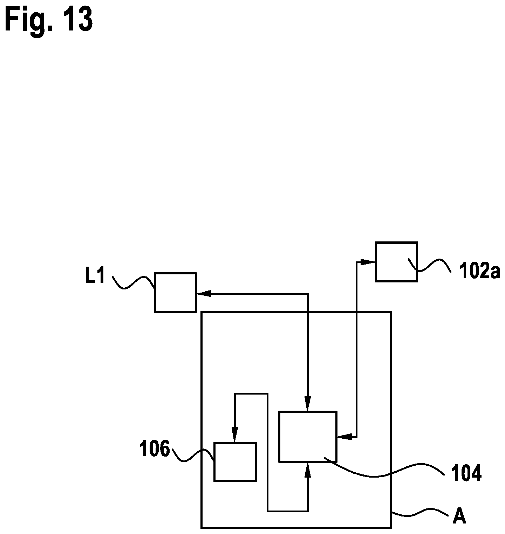

Die Figur 13 zeigt eine Auswerteeinrichtung A gemäß einer Ausführungsform der vorliegenden Erfindung.

Die Auswerteeinrichtung A umfasst eine Rechnereinheit 104 und eine Speichereinheit 106 und ist mit einer Kameraeinrichtung 102a und einer Beleuchtungseinrichtung L1 gekoppelt.

Die Auswerteeinrichtung A führt die Analyse der Bilddaten, die Prüfung auf Überschreitung der optimalen Fahrgeschwindigkeit, sowie schließlich die Bereitstellung des zweidimensionalen Gesamtbildes und der dreidimensionalen Tiefeninformation durch und steuert die Anzeigeeinrichtung B zur Anzeige der gewonnen dreidimensionalen Tiefeninformation und überträgt optional die dreidimensionale Tiefeninformation an einen übergeordneten Server C.

Für die Prüfung auf Schadstellen ist die Verwendung des absoluten Maßstabs für die zweidimensionalen Abbildung und das dreidimensionale Tiefenbild von untergeordneter Bedeutung. Daher ist in der Regel die Verwendung eines genäherten Objektmaßstabes ausreichend und durch die genäherte Information des Aufnahmeabstandes zwischen Kameraeinrichtung und Fahrzeugunterboden U hinreichend bekannt.

Eine Möglichkeit zur Bestimmung eines verbesserten Maßstabes ist die Verwendung einer bekannten Größe am Objekt. Wird im Unterbodenbild des Fahrzeugunterbodens U ein Bauteil identifiziert und ist die wahre Größe des Bauteils dem System bekannt, kann der Maßstab der jeweiligen Abbildung des Fahrzeugunterbodens U entsprechend angepasst werden. Die Einführung bekannter Bauteile ist möglich, wenn das Fahrzeug identifiziert wurde und entsprechende Daten in einer Datenbank des Servers C hinterlegt sind.

Eine Verbesserung des Maßstabs ist jedoch auch möglich, wenn Bauteile identifiziert werden, die über eine Vielzahl von Fahrzeugen verschiedener Hersteller und Baureihen eine gewisse Übereinstimmung aufweisen, wie z.B. Schraubenköpfe, der Durchmesser von Bremsleitungen oder der Durchmesser des Auspuffrohrs.

Vorteilhaft ist die Verwendung von mehr als einer Kameraeinrichtung unter Beibehaltung des beschriebenen Messprinzips. Dadurch kann die Qualität der Darstellung des Unterbodens gesteigert werden, indem zum einen der Abbildungsmaßstab vergrößert wird und zum anderen sichtbehinderte Räume durch gegenseitige Verdeckungen von Bauteile verringert werden. Die Generierung der dreidimensionalen Tiefeninformation erfolgt analog wie oben beschrieben.

Die vorerst unabhängigen dreidimensionalen Rekonstruktionen der einzelnen Kameras mit ihren jeweils unabhängig bestimmten Maßstäben werden über Objektmerkmale im Querüberdeckungsbereiche in ein gemeinsames Koordinatensystem transformiert. Eine Maßstabsanpassung der Ergebnisse dient der Anpassung der beiden erfassten Bereiche. So kann das System der ersten Kamera in das System der zweiten Kamera transformiert werden oder umgekehrt.

Wird mehr als eine Kameraeinrichtung verwendet, kann ihre gegenseitige Orientierung bekannt sein. Ist die Orientierung bekannt, kann der Querüberdeckungsbereich zur Bestimmung des absoluten Objektmaßstabes herangezogen werden.

Die vorerst unabhängigen dreidimensionalen Rekonstruktionen der einzelnen Kameras mit ihren jeweils unabhängig bestimmten Maßstäben mi werden über Objektmerkmale im Querüberdeckungsbereiche in ein gemeinsames Koordinatensystem transformiert.

Bei der Transformation gibt die aus den bekannten gegenseitigen Orientierungen abgeleitete Distanz zwischen den Kameraeinrichtungen den absoluten Maßstab für die Abbildung und das dreidimensionale Tiefenbild vor. Voraussetzung für die Berücksichtigung des absoluten Maßstabs aus gegenseitig bekannten Orientierungen ist eine synchrone Bilderfassung.

Eine weitere Möglichkeit zur Erzeugung eines dreidimensionalen Tiefenbildes mit nur einer Kameraeinrichtung ist gegeben, wenn ein an sich bekannter Strahlteiler vor dem Objektiv der Kameraeinrichtung zwei Halbbilder auf einen Bildsensor abbildet. Strahlteiler mit Spiegeln oder Prismen sind in der Hobbyphotographie und Filmindustrie im Einsatz und bieten eine einfache Möglichkeit zur Generierung des stereoskopischen Sehens.

Der Vorteil des Einsatzes einer Kameraeinrichtung mit einem Strahlenteiler liegt in der Möglichkeit zur unmittelbaren Erzeugung von synchronisierten Bildern bei konstruktiv bekannter gegenseitiger Orientierung der beiden virtuellen Kameras.

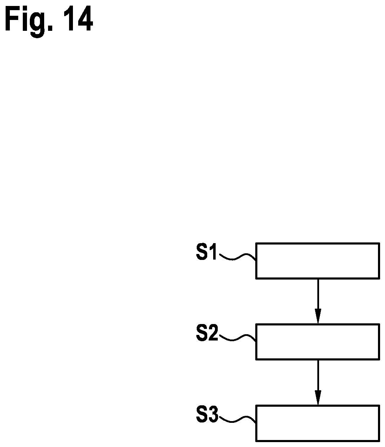

Die Figur 14 zeigt eine grafische Darstellung eines Flussdiagrammes eines Verfahrens zum Prüfen eines Fahrzeugunterbodens eines Kraftfahrzeuges gemäß einer weiteren Ausführungsform der vorliegenden Erfindung.

Als ein erster Schritt des Verfahrens erfolgt ein Erfassen S1 mindestens eines Abbildes KFa1, KFb1, KFc1, KFd1 zumindest eines Bereiches des Fahrzeugunterbodens U des Kraftfahrzeuges 10 mittels einer Kameraeinrichtung 102a, 102b, 102c, 102d.

Als ein zweiter Schritt des Verfahrens erfolgt ein Erzeugen S2 eines dreidimensionalen Tiefenbildes anhand des mindestens einen erfassten Abbildes KFa1, KFb1, KFc1, KFd1 des zumindest einen Bereiches des Fahrzeugunterbodens U des Kraftfahrzeuges 10. Als ein dritter Schritt des Verfahrens erfolgt ein Prüfen S3 des zumindest einen Bereiches des Fahrzeugunterbodens U des Kraftfahrzeuges 10 anhand des erzeugten dreidimensionalen Tiefenbildes des Fahrzeugunterbodens U mittels optischer Bilderkennung.

Das Verfahren zum Prüfen eines Fahrzeugunterbodens eines Kraftfahrzeuges kann an einer Einfahrt zu einer Tankstelle und/oder zu einer Kraftfahrzeugwerkstatt und/oder zu einem Parkplatz und/oder zu einem Kraftfahrzeughändler durchgeführt werden. Der Kraftfahrzeughändler kann dabei ein Gebrauchtwagenhändler sein.

Der Schutzumfang der Erfindung wird durch die beigefügten Ansprüche definiert.

## Patentansprüche

1. Verfahren zum Prüfen eines Fahrzeugunterbodens (U) eines Kraftfahrzeuges (10) mit folgenden Verfahrensschritten:
- sequentielles Erfassen (S1) von aufeinanderfolgenden Abbildern (KF1a-KF5a, KF1b-KF5b, KF1c-KF5c, KF1d-KF5d) zumindest eines Bereiches des Fahrzeugunterbodens (U) des sich über eine Kameraeinrichtung (102a, 102b, 102c, 102d) hinwegbewegenden Kraftfahrzeuges (10) mittels der Kameraeinrichtung (102a, 102b, 102c, 102d);
- Erzeugen (S2) eines dreidimensionalen Tiefenbildes anhand der erfassten Abbilder (KF1a-KF5a, KF1b-KF5b, KF1c-KF5c, KF1d-KF5d) des zumindest einen Bereiches des Fahrzeugunterbodens (U) des Kraftfahrzeuges (10), wobei zum Erzeugen (S2) des dreidimensionalen Tiefenbildes Übereinstimmungen in den Abbildern (KF1a-KF5a, KF1b-KF5b, KF1c-KF5c, KF1d-KF5d) ermittelt, von Abbild zu Abbild verfolgt und Bewegungsvektoren der Übereinstimmungen als Funktion der Zeit bestimmt werden;
- Analyse der Bilddaten, Bereitstellen eines zweidimensionalen Gesamtbildes und der dreidimensionalen Tiefeninformation, Bestimmen eines verbesserten Maßstabes unter Verwendung eines bekannten Bauteils am Fahrzeug, und
- Prüfen (S3) des zumindest einen Bereiches des Fahrzeugunterbodens (U) des Kraftfahrzeuges (10) anhand des erzeugten dreidimensionalen Tiefenbildes des Fahrzeugunterbodens (U) mittels optischer Bilderkennung.

2. Verfahren nach Anspruch 1, wobei das Verfahren bei einem über die Kameraeinrichtung (102a, 102b, 102c, 102d) hinweg rollenden Kraftfahrzeug (10) durchgeführt wird.

3. Verfahren nach Anspruch 2, wobei das Verfahren in Bereichen durchgeführt wird, in welchen das Kraftfahrzeug (10) nur mit Schrittgeschwindigkeit fährt.

4. Verfahren nach einem der Ansprüche 1 oder 2, wobei als die Kameraeinrichtung (102a, 102b, 102c, 102d) eine Kamera verwendet wird.

5. Verfahren nach einem der vorhergehenden Ansprüche, wobei als die Kameraeinrichtung (102a, 102b, 102c, 102d) eine Mehrzahl von Kameras verwendet wird.

6. Verfahren nach einem der vorhergehenden Ansprüche, wobei als die Kameraeinrichtung (102a, 102b, 102c, 102d) eine Mehrzahl von in entgegengesetzter Richtung ausgerichteten Kameras verwendet wird.

7. Verfahren nach einem der vorhergehenden Ansprüche, wobei das Verfahren an einer Einfahrt zu einer Tankstelle und/oder zu einer Kraftfahrzeugwerkstatt und/oder zu einem Parkplatz und/oder zu einem Kraftfahrzeughändler durchgeführt wird.

8. Anordnung zum Prüfen eines Fahrzeugunterbodens (U) eines Kraftfahrzeuges (10) mit:
- einer Kameraeinrichtung (102a, 102b, 102c, 102d), welche dazu ausgelegt ist, aufeinanderfolgende Abbilder (KF1a-KF5a, KF1b-KF5b, KF1c-KF5c, KF1d-KF5d) zumindest eines Bereiches des Fahrzeugunterbodens (U) des sich über die Kameraeinrichtung (102a, 102b, 102c, 102d) hinwegbewegenden Kraftfahrzeuges (10) sequentiell zu erfassen; und
- einer Auswerteeinrichtung (A), welche dazu ausgelegt ist, Übereinstimmungen in den Abbildern (KF1a-KF5a, KF1b-KF5b, KF1c-KF5c, KF1d-KF5d) zu ermitteln, von Abbild zu Abbild zu verfolgen und Bewegungsvektoren der Übereinstimmungen als Funktion der Zeit zu bestimmen, um ein dreidimensionalen Tiefenbild des zumindest einen Bereiches des Fahrzeugunterbodens (U) des Kraftfahrzeuges (10) zu erzeugen, eine Analyse der Bilddaten durchzufühen, ein zweidimensionales Gesamtbild und die dreidimensionale Tiefeninformation bereitzustellen, unter Verwendung eines bekannten Bauteils am Fahrzeug einen verbesserten Maßstab zu bestimmen, und den zumindest einen Bereich des Fahrzeugunterbodens (U) des Kraftfahrzeuges (10) anhand des erzeugten dreidimensionalen Tiefenbildes des Fahrzeugunterbodens (U) mittels optischer Bilderkennung zu prüfen.

9. Anordnung nach Anspruch 8, wobei die Anordnung ferner eine Anzeigeeinrichtung (B) aufweist, welche dazu ausgelegt ist, ein Prüfergebnis des Prüfens des Fahrzeugunterbodens (U) des Kraftfahrzeuges (10) anzuzeigen.

10. Anordnung nach einem der Ansprüche 8 und 9, wobei die Anordnung ferner eine Beleuchtungseinrichtung (L1, L2) aufweist, welche dazu ausgelegt ist, den Fahrzeugunterboden (U) des Kraftfahrzeuges (10) zu beleuchten.

## Claims

1. Method for inspection of a vehicle undercarriage (U) of a motor vehicle (10), comprising the following method steps:
- sequentially acquiring (S1) successive images (KFa1-KF5a, KF1b-KF5b, KF1c-KF5c, KF1d-KF5d) of at least one region of the undercarriage (U) of the motor vehicle (10) moving across a camera device (102a, 102b, 102c, 102d) by way of the camera device (102a, 102b, 102c, 102d);
- generating (S2) a three-dimensional depth image using the acquired images (KFa1-KF5a, KF1b-KF5b, KF1c-KF5c, KF1d-KF5d) of the at least one region of the undercarriage (U) of the motor vehicle (10), wherein, for generating (S2) the three-dimensional depth image, there are ascertained conformities in the images (KFa1-KF5a, KF1b-KF5b, KF1c-KF5c, KF1d-KF5d) and tracked from image to image and movement vectors of the conformities are determined as a function of time;
- analysis of the image data, providing a two-dimensional overall image and the three-dimensional depth information, determining an enhanced measure using a known component of the vehicle, and
- inspecting (S3) the at least one region of the undercarriage (U) of the motor vehicle (10) using the generated three-dimensional depth image of the undercarriage (U) by means of optical image recognition.

2. Method according to claim 1,
wherein the method is performed on a motor vehicle (10) rolling across the camera device (102a, 102b, 102c, 102d).

3. Method according to claim 2,
wherein the method is performed in areas in which the motor vehicle (10) moves at walking pace only.

4. Method according to any of claims 1 or 2,
wherein a camera is used as camera device (102a, 102b, 102c, 102d).

5. Method according to any of the preceding claims,
wherein a plurality of cameras is used as camera device (102a, 102b, 102c, 102d).

6. Method according to any of the preceding claims,
wherein a plurality of cameras oriented in opposite directions is used as camera device (102a, 102b, 102c, 102d).

7. Method according to any of the preceding claims,
wherein the method is carried out at an entrance to a gas station and/or to a motor vehicle workshop and/or to a parking lot and/or to a motor vehicle dealer.

8. Assembly for inspection of a vehicle undercarriage (U) of a motor vehicle (10), comprising:
- a camera device (102a, 102b, 102c, 102d) which is configured to sequentially acquire successive images (KFa1-KF5a, KF1b-KF5b, KF1c-KF5c, KF1d-KF5d) of at least one region of the undercarriage (U) of the motor vehicle (10) moving across the camera device (102a, 102b, 102c, 102d);
- an evaluation means (A) which is configured to ascertain conformities in the images (KFa1-KF5a, KF1 b-KF5b, KF1c-KF5c, KF1d-KF5d), to track the same from image to image and to determine movement vectors of the conformities as a function of time, in order to generate a three-dimensional depth image of the at least one region of the undercarriage (U) of the motor vehicle (10), to perform an analysis of the image data, to provide a two-dimensional overall image and the three-dimensional depth information, to determine an enhanced measure using a known component of the vehicle, and to inspect the at least one region of the undercarriage (U) of the motor vehicle (10) using the generated three-dimensional depth image of the undercarriage (U) by means of optical image recognition.

9. Assembly according to claim 8,
wherein the assembly further comprises a display means (B) which is adapted to display an inspection result of the inspection of the undercarriage (U) of the motor vehicle (10).

10. Assembly according to any of claims 8 and 9,
wherein the assembly further comprises an illumination means (L1, L2) which is adapted to illuminate the undercarriage (U) of the motor vehicle (10).

## Revendications

1. Procédé pour inspection de dessous de caisse (U) de véhicules (10) comprenant les étapes suivantes :
- saisie séquentielle (S1) d'images successives (KF1a-KF5a, KF1b-KF5b, KF1c-KF5c, KF1d-KF5d) d'au moins une zone du dessous de caisse (U) du véhicule (10) se déplaçant au-dessus d'un dispositif de caméra (102a, 102b, 102c, 102d) au moyen du dispositif de caméra (102a, 102b, 102c, 102d) ;
- création (S2) d'une image en profondeur tridimensionnelle à partir des images saisies (KF1a-KF5a, KF1b-KF5b, KF1c-KF5c, KF1d-KF5d) de ladite zone au moins du dessous de caisse (U) du véhicule (10),
sachant que, pour la création (S2) de l'image en profondeur tridimensionnelle, des correspondances dans les images (KF1a-KF5a, KF1b-KF5b, KF1c-KF5c, KF1d-KF5d) sont identifiées, suivies d'une image à l'autre et que des vecteurs de mouvement des correspondances sont déterminés en tant que fonction de temps ;
- analyse des données d'images, fourniture d'une image d'ensemble bidimensionnelle et de l'information en profondeur tridimensionnelle, détermination d'une échelle améliorée en se basant sur une pièce connue du véhicule et
- inspection (S3) de ladite zone au moins du dessous de caisse (U) du véhicule (10) à partir de l'image en profondeur tridimensionnelle créée du dessous de caisse (U) au moyen de la reconnaissance optique d'image.

2. Procédé selon la revendication 1, **caractérisé en ce que** le procédé est réalisé sur un véhicule (10) roulant au-dessus du dispositif de caméra (102a, 102b, 102c, 102d).

3. Procédé selon la revendication 2, **caractérisé en ce que** le procédé est réalisé dans des zones où le véhicule (10) avance uniquement au pas.

4. Procédé selon l'une quelconque des revendications 1 ou 2, **caractérisé en ce que** le dispositif de caméra (102a, 102b, 102c, 102d) utilisé est une caméra.

5. Procédé selon l'une quelconque des revendications précédentes, **caractérisé en ce que** le dispositif de caméra (102a, 102b, 102c, 102d) comporte une pluralité de caméras.

6. Procédé selon l'une quelconque des revendications précédentes, **caractérisé en ce que** le dispositif de caméra (102a, 102b, 102c, 102d) comporte une pluralité de caméras orientées dans des directions opposées.

7. Procédé selon l'une quelconque des revendications précédentes, **caractérisé en ce que** le procédé est réalisé à l'entrée d'une station-service et/ou d'un garage et/ou d'un parking et/ou d'un concessionnaire automobile.

8. Appareil pour inspection de dessous de caisse (U) de véhicules (10) avec :
- un dispositif de caméra (102a, 102b, 102c, 102d), configuré de manière à saisir séquentiellement des images consécutives (KF1a-KF5a, KF1b-KF5b, KF1c-KF5c, KF1d- KF5d) d'au moins une zone du dessous de caisse (U) du véhicule (10) se déplaçant au-dessus du dispositif de caméra (102a, 102b, 102c, 102d) ; et
- un dispositif d'évaluation (A), configuré de manière à identifier des correspondances dans les images (KF1a-KF5a, KF1b-KF5b, KF1 c-KF5c, KF1d-KF5d), à les suivre d'une image à l'autre et à déterminer des vecteurs de mouvement des correspondances en tant que fonction de temps afin de créer une image en profondeur tridimensionnelle de l'une zone au moins du dessous de caisse (U) du véhicule (10), de réaliser une analyse des données d'images, de fournir une image d'ensemble bidimensionnelle et l'information en profondeur tridimensionnelle, de déterminer une échelle améliorée en se basant sur une pièce connue du véhicule et d'inspecter ladite zone au moins du dessous de caisse (U) du véhicule (10) à partir de l'image en profondeur tridimensionnelle créée du dessous de caisse (U) au moyen de la reconnaissance optique d'image.

9. Appareil selon la revendication 8, **caractérisé en ce que** l'appareil présente en outre un dispositif d'affichage (B), configuré de manière à afficher le résultat de l'inspection du dessous de caisse (U) du véhicule (10).

10. Appareil selon l'une quelconque des revendications 8 et 9, **caractérisé en ce que** l'appareil présente en outre un dispositif d'éclairage (L1, L2), configuré de manière à éclairer le dessous de caisse (U) du véhicule (10).
